# EUROPÄISCHE PATENTSCHRIFT

(11) **EP 0 712 502 B1**
(45) Veröffentlichungstag und Bekanntmachung des Hinweises auf die Patenterteilung: **26.03.1997**
(21) Anmeldenummer: 94921604.8
(22) Anmeldetag: 28.07.1994
(51) Int. Cl.: G02B 25/00

(54) **OPTISCHE LESEVORRICHTUNG**
OPTICAL READING DEVICE
DISPOSITIF DE LECTURE OPTIQUE

(30) Priorität: 05.08.1993 DE 9311692 U
(43) Veröffentlichungstag der Anmeldung: 22.05.1996
(73) Patentinhaber: ESCHENBACH OPTIK GmbH + Co., 90409 Nürnberg (DE)
(72) Erfinder: WINKLER, Kurt, D-90574 Rosstal (DE)
(74) Vertreter: Tergau, Enno, Dipl.-Ing.
(86) Internationale Anmeldenummer: DE9400881
(87) Internationale Veröffentlichungsnummer: WO9504950

(56) Entgegenhaltungen:
- WO-A-93/12451
- DE-U- 8 232 211
- DE-U- 9 003 214
- US-A- 3 945 717
- US-A- 4 958 913

## Beschreibung

Die Erfindung bezieht sich auf eine optische Lesevorrichtung mit einem stabförmigen Linsenkörper.

Es sind sogenannte Lesestäbe oder Zeilenlupen in unterschiedlicher Ausgestaltung z.B. aus den Druckschriften US-PS 2,420,021, US-PS 2,151,573 und US-PS 2,057,807 sowie der Europäischen Patentanmeldung 0 107 256 und dem Deutschen Gebrauchsmuster G 82 32 211 bekannt. Sie dienen üblicherweise als Vergrößerungshilfe zum Lesen eines Gutes, z.B. zum Lesen von Schriftzeilen. Das Wesen dieser bekannten Lesestäbe liegt in der Zylinderform ihrer Linsenkörper oder Oberflächen. Dabei ist üblicherweise lediglich die Durchsichtsfläche der Oberseite zylindrisch ausgebildet, während die Auflagefläche zum Lesegut, nämlich die Unterseite, plan ist.

Derartige Lesestäbe vergrößern nur in einer Richtung. Ist die Stabrichtung mit der Zeilenrichtung identisch, so wird die Zeile lediglich in der Höhe und somit nur senkrecht zum Lesegut vergrößert. Darüber hinaus werden nur kleine Abbildungsmaßstäbe von z.B. 1,8-fach erreicht.

Es sind auch Leselupen mit rechteckiger Umrißform bekannt, bei denen mindestens eine Krümmungsfläche des Linsenkörpers sowohl in Stablängsrichtung als auch in Stabbreitenrichtung konvex ausgebildet ist, wobei der Linsenkörper zwei quer zur Stablängsrichtung verlaufende planparallele Seitenflächen aufweist.

Solche Linsen weisen aber den Nachteil auf, daß für den Benutzer nur eine einzige Vergrößerung zur Verfügung steht. Wenn eine andere Vergrößerung gewünscht wird, muß eine zweite Linse mit der gewünschten Vergrößerung bereitgestellt werden. Es wäre auch denkbar, eine Lesevorrichtung der in Rede stehenden Art mit mehreren Linsen unterschiedlicher Vergrößerung auszustatten. Dies würde aber das Gewicht einer solchen Vorrichtung erhöhen und ihre Handhabbarkeit verschlechtern.

Davon ausgehend ist es die Aufgabe der Erfindung, eine Lesevorrichtung zu schaffen, die konstruktiv einfach und leicht handhabbar ist, sowie wenigstens zwei unterschiedliche Vergrößerung aufweist.

Diese Aufgabe wird durch die Merkmale des Anspruches 1 gelöst. Die optische Lesevorrichtung enthält einen stabförmigen Linsenkörper mit einem ersten und zweiten Paar von sich in Stablängsrichtung erstreckenden und sich paarweise gegenüberliegenden Seitenflächen. Zumindest die eine Seitenfläche des ersten Seitenflächenpaares ist als Krümmungsfläche ausgebildet, die sowohl in Stablängsrichtung als auch in Stabbreitenrichtung konvex gekrümmt ist. Zumindest eine der Seitenflächen des zweiten Seitenflächenpaares weist eine zusätzliche Krümmungsoberfläche auf. Dadurch ist es möglich, auf ganz einfache Weise, nämlich durch Schwenkung der optischen Lesevorrichtung um ihre Längsachse von der einen, durch das erste Seitenflächenpaar gebildeten Ansicht auf eine zweite, durch das zweite Seitenflächenpaar gebildete Ansicht mit einer anderen Vergrößerung umzuschalten.

Durch die konvexe Ausbildung der Oberfläche des Linsenkörpers in zwei Dimensionen, d.h. in Zeilenhöhenrichtung und in Zeilenlängsrichtung, wird eine segmentartige Linsenkörperform mit in beiden Dimensionen gleichermaßen wirksamer Vergrößerung erreicht. Diese segmentartige Linsenkörperform führt zu einer erheblichen Volumenreduzierung bei gleichzeitig besonders breitem Sehfeld.

Bei den Oberflächenkrümmungen kann es sich um sphärische oder asphärische Krümmungen handeln. Bevorzugt wird man jedoch derart vorgehen, daß im Mittenbereich des Linsenkörpers sowohl in x-Richtung als auch in y-Richtung sphärische Krümmungen vorliegen, die in den Randbereichen in asphärische Krümmungen übergehen. Dadurch werden andernfalls vorhandene Randverzerrungen infolge von Abbildungsfehlern kompensiert. Dieser Aspekt der Randverzerrung ist bedeutend, weil ein breites Sehfeld erzeugt wird, welches durch handelsübliche Rundlinsen aufgrund des großen Lupendurchmessers in der Regel nicht geliefert werden kann.

In zweckmäßiger Ausgestaltung sind beide Seitenflächen des ersten Seitenflächenpaares als gleichermaßen gekrümmte Krümmungsflächen ausgebildet. D.h., sie sind sowohl auf der Oberseite oder Durchsichtsfläche als auch auf der der zu lesenden Zeile zugewandten Unterseite gleichermaßen gekrümmt. Dadurch wird ein besonders hoher Vergrößerungsgrad von z.B. 10-fach erzielt.

Der Krümmungsradius wird mit zunehmendem Vergrößerungsgrad kleiner, während die Dicke des Linsenkörpers, nämlich der Abstand zwischen den beiden vorzugsweise gleichermaßen konvex ausgebildeten Krümmungsflächen, größer wird. Dadurch gewinnt der Linsenkörper die Kugelsegmentform mit zwei in Stab- oder Zeilenlängsrichtung verlaufenden, bezüglich der Grundstruktur planparallelen Seitenflächen.

Die Krümmungsoberflächen dieses Linsenkörpers sind in lotrechter Draufsicht auf diese planparallelen Seitenflächen somit im weitesten Sinne ellipsoid ausgebildet. Dies ist eine Grundform des Linsenkörpers.

Auf dieser Grundform, die den größten Vergrößerungsgrad aufweist, bauen die in den Unteransprüchen 4 bis 10 angegebenen vorteilhaften Weiterbildungen auf.

Der Linsenkörper ist zweckmäßigerweise aus Polymethylmetacrylat (PMMA) einstükkig gespritzt. Alternativ kann aber auch ein sich im Zentrum des Linsenkörpers über die gesamte Stablänge erstreckender Polycarbonatkern zur Bildung eines Triplets beidseitig mit einer PMMA-Auflage versehen sein, die an ihren beidseitigen Außenflächen die Linsenkrümmungen tragen. Solche Triplets werden zur Korrektur von Farbfehlern infolge chromatischer Aberration verwendet. Ebenso ist es zweckmäßig den Linsenkörper durch Kombination einer konvexen und einer konkaven Fläche als Achromat auszubilden, um Abbildungsfehler durch chromatische Aberration zu beheben

Die zusätzlichen Krümmungsoberflächen der Seitenflächen des zweiten Seitenflächenpaares können unterschiedlich gestaltet sein. Es kann sich dabei um sphärische Rundlinsen oder wieder um asphärische streifenförmige Linsen bzw. Zeilenlupen handeln. Dadurch wird praktisch eine Zweitlinse oder Zweitlupe mit unterschiedlichem Vergrößerungsgrad geschaffen, und zwar unabhängig davon, ob dies im Vergleich zur Hauptlinse ein großer oder kleiner Vergrößerungsgrad ist.

Dieser Gedanke kann nun noch in der dritten Dimension verwirklicht werden, indem eine dritte Linse in Zeichen-Höhenrichtung, d.h. in Stabbreitenrichtung aufgebracht oder mitgespritzt wird. Dadurch werden in einem Sehfeld verschiedene Vergrößerungsgrade geliefert. Eine derartige Lesevorrichtung kann bei in den drei Dimensionen ausgerichteten Krümmungsoberflächen einen Linsenkörper mit drei unterschiedlichen Krümmungsgraden enthalten.

Die mit der Erfindung erzielten Vorteile bestehen insbesondere darin, daß durch die konvexe Ausbildung der oder jeder Krümmungsfläche sowohl in Längs- als auch in Breitenrichtung des Linsenkörpers ein guter Überblick über ein Lesegut (peripheres Sehen) sowie gleichzeitig ein schnelles und sicheres Lesen ermöglicht wird. Von besonderem Vorteil ist ein enges beieinanderliegen von Ober- und Unterkante des Linsenkörpers, so daß z.B. nicht mehr als drei oder vier Zeilen eines üblichen Zeitungsdrucks im Sehfeld der Lesevorrichtung liegen.

Durch die nach außen gerichtete Wölbung des Linsenkörpers in zwei Dimensionen, nämlich in Zeilenlängs- und Zeilenbreitenrichtung, wird eine Reduzierung der Linsenkörperhöhe und damit eine kurze Linsendiagonale erzielt, so daß im Vergleich zu großflächigen, rechteckigen Lesegläsern bei gleicher Mittendicke des Linsenkörpers größere Stab- oder Linsenkörperbreiten realisiert werden können. Dies führt für den Anwender zu einer besonders hohen Lesegeschwindigkeit und zu hohem Lesekomfort.

Zur näheren Erläuterung der Erfindung werden anhand einer Zeichnung Ausführungsbeispiele beschrieben. Darin zeigen:
Figuren 1,2,3 und 4 eine Lesevorrichtung in einer Seitenansicht, einer Draufsicht, einer perspektivischen Ansicht und einem Querschnitt, die die Grundform der erfindungsgemäßen Lesevorrichtungen bildet,
Figuren 5, 6, 7 und 8 eine Lesevorrichtung mit einer zusätzlichen hochvergrößernden Rundlinse wobei Figur 8 einen Schnitt entlang der Linie A-A in Figur 5 zeigt,
Figuren 9 bis 12 eine weitere Ausführungsform des Linsenkörpers mit zusätzlich zwei seitlichen Rundlinsen,
Figuren 13 bis 16 eine Ausführungsform des Linsenkörpers mit zusätzlich zwei seitlichen ashärischen Linsen.

Einander entsprechende Teile sind in allen Figuren mit den gleichen Bezugszeichen versehen.

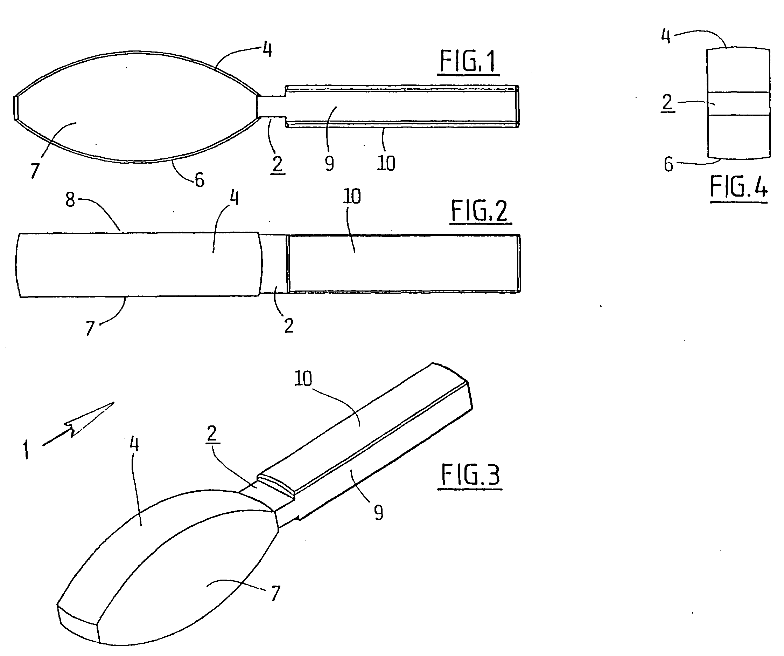

Eine optische Lesevorrichtung 1 umfaßt einen stabförmigen Linsenkörper 2, dessen Oberseite und 4 dessen dem (nicht dargestellten) Lesegut zugewandte Unterseite 6 sowohl in Stablängsrichtung als auch in Stabbreitenrichtung konvex gekrümmt sind. Die Oberseite bildet als eine Krümmungsfläche 4 die Durchsichtsfläche, während die Unterseite als weitere Krümmungsfläche 6 die einem (nicht dargestellten) Lesegut zugewandte oder Auflagefläche darstellt. Ober- und Unterseite bilden dabei ein erstes Seitenflächenpaar. Die Krümmungen in Stabbreitenrichtung sind in den Figuren 4, 8, 12 und 16 zu erkennen. Der Linsenkörper 2 in seiner Grundform weist im wesentlichen planparallele Seitenflächen 7, 8 auf, die ein zweites Seitenflächenpaar bilden.

Ein Haltegriff 9 ist in Stablängsrichtung entweder an den Linsenkörper 2 angesetzt oder zusammen mit diesem aus einem Stück gefertigt. Aufgesetzte, in Stabbreitenrichtung gewölbte Griffteile 10, die vorzugsweise aus Kunststoff bestehen, ermöglichen ein rutschfestes Halten beim bestimmungsgemäßen Gebrauch der Lesevorrichtung 1.

Die optische Lesevorrichtung 1 dient vorteilhafterweise als binokulare, also beidäugig benutzbare Lese- oder Vergrößerungshilfe für hohe Vergrößerungen und große Sehfelder. Sie ist daher besonders geeignet für einen weitsichtigen Benutzer, der es gewohnt ist, das Lesegut mit großem Abstand von sich zu halten und mit beiden Augen zu lesen. Für einen sehbehinderten Benutzer wird das Halten oder Verfolgen einer Zeile eines Schriftgutes erheblich erleichtert.

Die Dioptrienzahl der Lesevorrichtung 1 kann auch entsprechend einer Lupe oberhalb von acht Dioptrien liegen.

Die Lesevorrichtung 1 eignet sich vorteilhafterweise auch entsprechend einem herkömmlichen Leseglas für einen großen Abstand zwischen Auge und Linsenkörper 2. Um ein möglichst großes Sehfeld auch bei dem genannten großen Abstand zu erzeugen, kann die Stabbreite besonders groß gewählt werden. Die asphärische Ausgestaltung des Linsenkörpers 2 ermöglicht dabei eine ausreichende Stabbreite bei günstiger oder tolerabler Dicke, nämlich dem Abstand zwischen den Krümmungsflächen der Oberseite 4 und der Unterseite 6, insbesondere im Zentrum des Linsenkörpers 2.

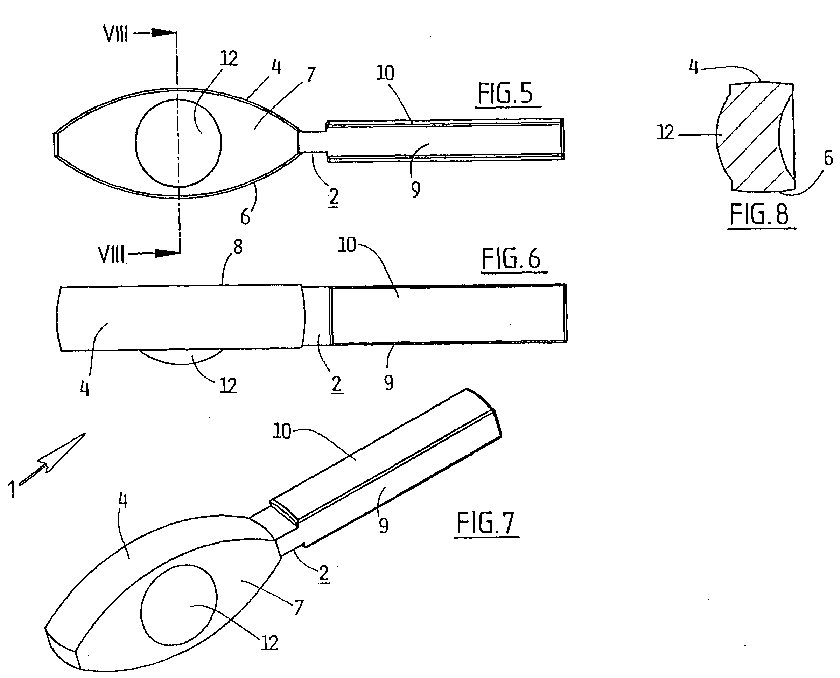

Bei den Ausführungsbeispielen gemäß den Figuren 5 bis 8 ist eine zusätzliche Lupe in Form einer runden Linse 12 vorgesehen, die auf einer der planparallelen Seitenflächen 7 oder 8 aufgebracht ist. Diese im Nahbereich hochvergrößernde Linse 12 wird durch eine 90°-Drehung des Linsenkörpers 2 aktiviert, bezogen auf dessen normaler Gebrauchsstellung mit dem Lesegut zugewandter Unterseite bzw. Krümmungsfläche 6.

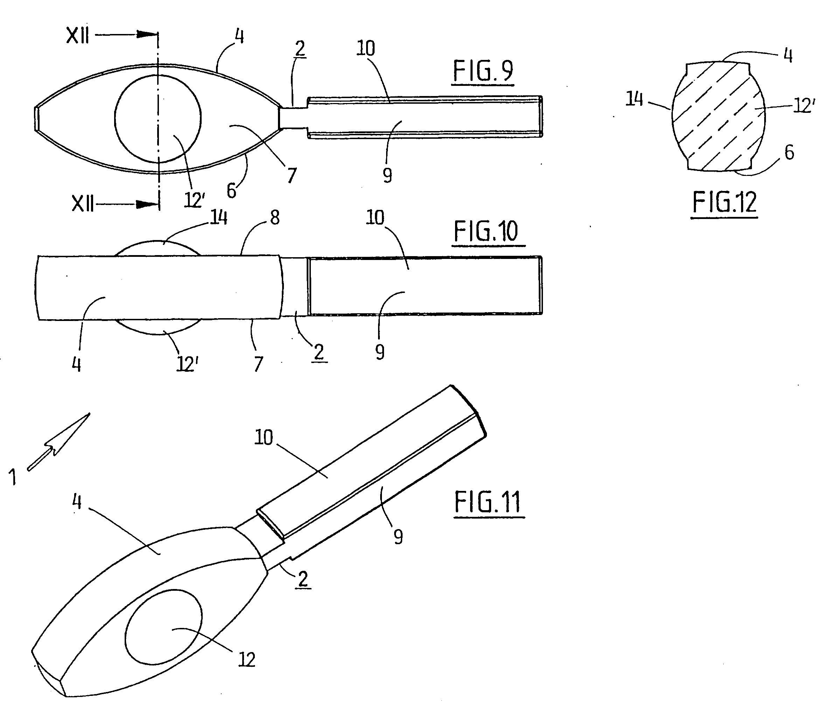

Beim Ausführungsbeispiel gemäß den Figuren 9 bis 12 weist der Linsenkörper 2 auf jeder der planparallelen Seitenflächen 7 und 8 eine weitere runde Linse 12' bzw. 14 auf. Hiermit ist eine zusätzliche Vergrößerungsmöglichkeit für den Fernbereich geschaffen.

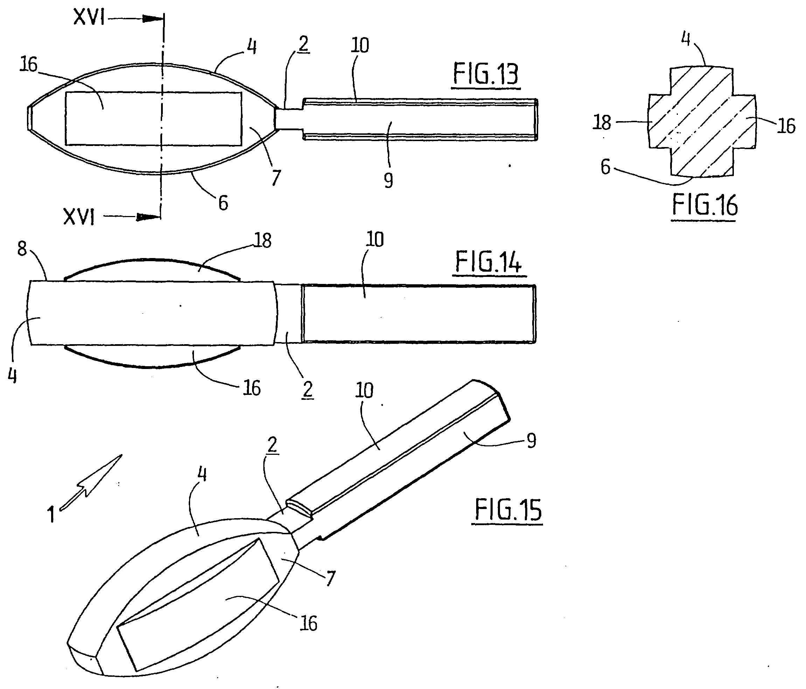

Die durch eine 90°-Drehung des Linsenkörpers 2 aktivierbare Zweitlupe ist im Ausführungsbeispiel gemäß den Figuren 13 bis 16 eine Zeilenlupe aus zwei auf den planparallelen Seitenflächen 7 und 8 aufgebrachten asphärischen Linsen 16 bzw. 18. Die Vergrößerung ist dabei kleiner als die der durch die Krümmungsflächen 4 und 6 der Oberseite und der Unterseite begrenzten Hauptlupe.

Das Verhältnis von Stabbreite zur Stablänge des Linsenkörpers 2 liegt vorteilhafterweise zwischen 1:3 und 1:10. Zweckmäßige Längen-Breiten-Abmessungen sind z.B. 120 mm mal 20 mm, 125 mm mal 25 mm oder 140 mm mal 25 mm ect. Dadurch werden besonders kurze Linsen- oder Linsenkörperdiagonalen erzielt. Daraus resultieren ein geringes Volumen des Linsenkörpers 2 sowie ein geringes Spritzgewicht, was insgesamt eine sehr kompakte Sehhilfe ergibt. Kurze Standzeiten des Herstellungsprozesses führen dabei zu einer besonders wirtschaftlichen Herstellung der Lesevorrichtung 1.

### Bezugszeichenliste

1. Optische Lesevorrichtung
2. Linsenkörper
4. Krümmungsfläche
6. Krümmungsfläche
7. Seitenfläche
8. Seitenfläche
9. Handgriff
10. Griffteile
12. Rundlinse
14. Rundlinse
16. streifenförmige Linse
18. streifenförmige Linse

## Patentansprüche

1. Optische Lesevorrichtung mit einem stabförmigen Linsenkörper (2) mit einem ersten und einem zweiten Paar von sich in Stablängsrichtung erstreckenden und sich paarweise gegenüberliegenden optischen Seitenflächen, wobei zumindest eine Seitenfläche des ersten Seitenflächenpaares als Krümmungsfläche (4,6) ausgebildet ist, die sowohl in Stablängsrichtung als auch in Stabbreitenrichtung konvex gekrümmt ist,
dadurch gekennzeichnet,
daß mindestens eine Seitenfläche (7,8) des zweiten Seitenflächenpaares eine zusätzliche Krümmungsoberfläche aufweist.

2. Optische Lesevorrichtung nach Anspruch 1,
dadurch gekennzeichnet,
daß die Krümmungsfläche (4,6) im Mittenbereich sphärisch und in den an diesen sich anschließenden Randbereichen aspärisch gekrümmt ist.

3. Optische Lesevorrichtung nach Anspruch 1 oder 2,
dadurch gekennzeichnet,
daß der Linsenkörper (2) auf der Oberseite (4) und auf der Unterseite (6) gleichermaßen gekrümmt ist.

4. Optische Lesevorrichtung nach einem der Ansprüche 1 bis 3,
dadurch gekennzeichnet,
daß die mindestens eine zusätzliche Krümmungsoberfläche als sphärische Rundlinse (12,12',14) ausgebildet ist.

5. Optische Lesevorrichtung nach einem der Ansprüche 1 bis 3,
dadurch gekennzeichnet,
daß mindestens eine zusätzliche Krümmungsoberfläche als asphärische streifenförmige Linse (16,18) ausgebildet ist.

6. Optische Lesevorrichtung nach Anspruch 5,
dadurch gekennzeichnet,
daß sich die streifenförmigen Linsen (16,18) nahezu über die gesamte Länge des Linsenkörpers (2) erstrecken.

7. Optische Lesevorrichtung nach einem der Ansprüche 1-6,
dadurch gekennzeichnet,
daß das erste Seitenflächenpaar eine andere Vergrößerung aufweist, als das zweite Seitenflächenpaar.

8. Optische Lesevorrichtung nach einem der Ansprüche 1 bis 7,
dadurch gekennzeichnet,
daß das Verhältnis von Stabbreite zu Stablänge des Linsenkörpers (2) zwischen 1:3 und 1:10 liegt.

9. Optische Lesevorrichtung nach einem der Ansprüche 1 bis 8,
dadurch gekennzeichnet,
daß der Linsenkörper (2) einseitig mit einem sich in Stablängsrichtung erstreckenden Haltegriff (9) versehen ist.

10. Optische Lesevorrichtung nach einem der Ansprüche 1 bis 9,
dadurch gekennzeichnet,
daß der Linsenkörper (2) aus Kunststoff, vorzugsweise aus Polymethacrylsäureester, einstückig oder mehrschichtig gespritzt ist.

## Claims

1. Optical reading device having a rod-shaped lens element (2) with a first and a second pair of optical side surfaces which extend in the rod longitudinal direction and are located opposite each other in pairs, at least one side surface of the first pair of side surfaces being designed as a curved surface (4,6) which is convexly curved both in the rod longitudinal direction and in the rod width direction, characterized in that at least one side surface (7,8) of the second pair of side surfaces has an additional curved surface.

2. Optical reading device according to Claim 1, characterized in that the curved surface (4, 6) is curved spherically in the central region and is curved aspherically in the edge regions adjoining said central region.

3. Optical reading device according to Claim 1 or 2, characterized in that the lens element (2) is curved to the same extent on the upper side (4) and on the lower side (6).

4. Optical reading device according to one of Claims 1 to 3, characterized in that the at least one additional curved surface is designed as a spherical round lens (12,12',14).

5. Optical reading device according to one of Claims 1 to 3, characterized in that at least one additional curved surface is designed as an aspherical strip-shaped lens (16,18).

6. Optical reading device according to Claim 5, characterized in that the strip-shaped lenses (16,18) extend virtually over the entire length of the lens element (2).

7. Optical reading device according to one of Claims 1-6, characterized in that the first pair of side surfaces has a different magnification from the second pair of side surfaces.

8. Optical reading device according to one of Claims 1 to 7, characterized in that the ratio of rod width to rod length of the lens element (2) is between 1:3 and 1:10.

9. Optical reading device according to one of Claims 1 to 8, characterized in that the lens element (2) is provided on one side with a handle (9) extending in the rod longitudinal direction.

10. Optical reading device according to one of Claims 1 to 9, characterized in that the lens element (2) is injection-moulded from plastic, preferably polymethacrylate, in one piece or in many layers.

## Revendications

1. Dispositif de lecture optique équipé d'un corps de lentille (2) sous forme de tige avec une première et une deuxième paires de surfaces latérales optiques s'étendant dans la direction longitudinale de la tige et se faisant face par paires, au moins une surface latérale de la première paire de surfaces latérales étant réalisée en tant que surface de courbure (4, 6), qui présente une courbure convexe non seulement dans le sens longitudinal de la tige, mais également dans le sens de la largeur de la tige, caractérisé en ce qu'au moins une surface latérale (7, 8) de la seconde paire de surfaces latérales présente une surface de courbure supplémentaire.

2. Dispositif de lecture optique selon la revendication 1, caractérisé en ce que la surface de courbure (4, 6) présente une courbure sphérique dans la zone médiane et asphérique dans les régions de bord se raccordant à celle-ci.

3. Dispositif de lecture optique selon la revendication 1 ou 2, caractérisé en ce que le corps de lentille (2) est courbé identiquement sur le côté supérieur (4) et sur le côté inférieur (6).

4. Dispositif de lecture optique selon une des revendications 1 à 3, caractérisé en ce qu'au moins une surface de courbure supplémentaire est réalisée sous la forme d'une lentille circulaire sphérique (12, 12', 14).

5. Dispositif de lecture optique selon l'une des revendications 1 à 3, caractérisé en ce qu'au moins une surface de courbure supplémentaire est réalisée sous la forme d'une lentille en forme de bande asphérique (16, 18).

6. Dispositif de lecture optique selon la revendication 5, caractérisé en ce que les lentilles sous forme de bande (16, 18) s'étendent presque sur toute la longueur du corps de lentille (2).

7. Dispositif de lecture optique selon une des revendication 1 à 6, caractérisé en ce que la première paire de surfaces latérales présente un grossissement différent de la seconde paire de surfaces latérales.

8. Dispositif de lecture optique selon une des revendications 1 à 7, caractérisé en ce le rapport de la largeur de la tige à la longueur de la tige du corps de lentille (2) est compris entre 1:3 et 1:10.

9. Dispositif de lecture optique selon une des revendications 1 à 8, caractérisé en ce que le corps de lentille (2) est muni d'un côté d'une poignée de retenue (9) s'étendant dans la direction longitudinale de la tige.

10. Dispositif de lecture optique selon une des revendications 1 à 9, caractérisé en ce que le corps de lentille (2) est en matière plastique moulé d'une seule pièce ou à plusieurs couches, de préférence en polymétacrylate.
